# EUROPÄISCHE PATENTSCHRIFT

(11) **EP 3 181 421 B1**
(45) Veröffentlichungstag und Bekanntmachung des Hinweises auf die Patenterteilung: **24.03.2021**
(21) Anmeldenummer: 16199167.4
(22) Anmeldetag: 16.11.2016
(51) Int. Cl.: B60W 30/165, B60W 30/095

(54) **VERFAHREN UND SYSTEM ZUR AUTOMATISCHEN STEUERUNG EINES FOLGEFAHRZEUGS MIT EINEM VORDERFAHRZEUG**
METHOD AND SYSTEM FOR AUTOMATICALLY GUIDING A FOLLOW VEHICLE WITH A FRONT VEHICLE
PROCÉDÉ ET SYSTÈME DE COMMANDE AUTOMATIQUE D'UN VÉHICULE SUIVEUR À L'AIDE D'UN VÉHICULE MENEUR

(30) Priorität: 15.12.2015 DE 102015225241
(43) Veröffentlichungstag der Anmeldung: 21.06.2017
(73) Patentinhaber: VOLKSWAGEN AKTIENGESELLSCHAFT, 38440 Wolfsburg (DE)
(72) Erfinder: Darms, Michael, 38165 Lehre (DE); Meinecke, Marc-Michael, 38524 Sassenburg (DE); Bartels, Arne, 38448 Wolfsburg (DE); Junge, Lutz, 38106 Braunschweig (DE)

(56) Entgegenhaltungen:
- EP-A1- 0 991 046
- DE-A1-102012 208 256
- DE-A1-102014 200 804
- GB-A- 2 511 750
- US-A1- 2006 229 793
- US-A1- 2012 022 739
- US-A1- 2015 177 007

## Beschreibung

Die vorliegende Erfindung betrifft ein Verfahren zur automatischen Steuerung eines Folgefahrzeugs. Sie betrifft ferner ein System zur automatischen Steuerung eines Folgefahrzeugs mit einem Vorderfahrzeug.

Zur Steigerung der Effizienz und Sicherheit im Verkehr und in der Logistik, insbesondere beim Transport von Gütern, aber auch im Personentransportwesen, wird eine weitreichende Automatisierung von Fahrzeugen angestrebt. Dazu sind bereits Techniken bekannt, die durch automatische Eingriffe auf verschiedenen Ebenen in die Steuerung eines Fahrzeugs den Fahrer entlasten oder einzelne Fahrmanöver vollautomatisch durchführen. Dies reicht bis zu einer Fernsteuerung oder dem autonomen Abfahren einer Route durch ein Fahrzeug.

Die DE 10 2005 059 517 A1 beschreibt ein solches System zum Führen und Operieren eines Fahrzeugs ohne Fahrer, wobei Daten von Sensoren des Fahrzeugs zu einer Einsatzzentrale weitergeleitet werden und von der Einsatzzentrale Einsatzdaten zur Steuerung des Fahrzeugs auf dieses übertragen werden. Dabei wird eine Datenübertragung zwischen Fahrzeug und Einsatzzentrale in annähernder Echtzeit vorausgesetzt beziehungsweise eine eventuell auftretende Zeitverzögerung wird technisch kompensiert.

Bei dem in der DE 10 2013 212 255 A1 beschriebenen Verfahren überprüft ein erstes Fahrzeug mit einer Sensorik einen Raum relativ zum ersten Fahrzeug und überträgt das Ergebnis der Überprüfung an ein zweites Fahrzeug. Dadurch kann diesem beispielsweise mitgeteilt werden, ob ein Raum in der Umgebung des ersten Fahrzeugs frei ist und ob ein Einscheren durchgeführt werden kann.

Bei dem in der DE 10 2013 225 011 A1 beschriebenen Verfahren wird in einem hochautomatisiert fahrenden Kraftfahrzeug die eigene Position mit externen Daten über eine aktuelle Verkehrssituation abgeglichen und entschieden, ob eine Änderung des Fahrzustands erforderlich ist. Insbesondere wird erkannt, ob das Fahrzeug auf ein Hindernis oder einen anderweitig nicht automatisch befahrbaren Streckenabschnitt zufährt. Dies kann etwa zum Abbruch der automatisierten Fahrt führen. Beispielsweise kann eine Sperrung eines vor dem Fahrzeug liegenden Streckenabschnitts für die automatisierte Fahrt verarbeitet werden oder es kann eine Staumeldung zum rechtzeitigen Abbruch der hochautomatisierten Fahrt dienen.

Die DE 10 2012 212 681 A1 beschreibt ein Verfahren zum autonomen Geleiten von Fahrzeugen. Dabei empfängt ein Folgefahrzeug eine Zielposition relativ zu einem Leitfahrzeug sowie Routendaten über die durch das Leitfahrzeug befahrene Route. Durch Borderfassungsvorrichtungen des Folgefahrzeugs wird ferner der zurückgelegte Weg des Leitfahrzeugs erfasst und anhand dieser Daten werden Nachführungsdaten abgeleitet. Durch einen Vergleich der Routendaten und der Nachführungdaten wird eine Genauigkeit bestimmt. Anschließend erfolgt auf Basis der Genauigkeit eine autonome Steuerung des Folgefahrzeugs zu der Zielposition relativ zum Leitfahrzeug.

Ferner wird in der DE 10 2012 208 256 A1 ein Verfahren zum autonomen Nachführen eines Folgefahrzeugs auf der Spur eines Leitfahrzeugs beschrieben, bei dem das Leitfahrzeug Routeninformationen und erste Koordinationsinformationen an das Folgefahrzeug sendet. Durch Umfeldsensoren des Folgefahrzeugs werden Fahrbewegungen des Leitfahrzeugs erfasst und anhand dieser Informationen zweite Koordinationsinformationen erzeugt. Die ersten und zweiten Koordinationsinformationen werden verglichen und ein autonomes Nachführen wird ausgeführt, wenn sie übereinstimmen.

Eine zentrale Voraussetzung für den sicheren Betrieb derartiger Systeme ist eine hohe Redundanz bei den verwendeten Sicherungsvorkehrungen. Typischerweise setzt die automatische Durchführung eines Fahrmanövers die Anwesenheit eines Fahrers voraus, der die Bewegung des Fahrzeugs überwacht und korrigierend eingreifen kann. Dies beugt insbesondere Fehlfunktionen des Systems vor, etwa bei defekten Sensoren oder in ungewöhnlichen Verkehrssituationen. Es ist in diesem Fall also kein vollständig automatisches Fahren implementiert, sondern ein assistiertes Fahren. Der Automatisierungsgrad ist dabei an die technische Ausführung des Systems, insbesondere an die vorgesehenen Redundanzen, angepasst.

Soll das System vollständig automatisch betrieben werden, als ohne dass für jedes Fahrzeug ein Fahrer vorgesehen ist, so müssen hochgradige Redundanzen auf technischer Ebene vorgesehen sein. Dies wird etwa durch den Einbau einer Vielzahl von - teils mehrfach ausgelegten - Sensoren im Fahrzeug erreicht. Dabei sind allerdings die Möglichkeiten der Integration von Sensoren in einem Fahrzeug räumlich beschränkt, ferner können beträchtliche Zusatzkosten entstehen.

Bei den oben beschriebenen Systemen ist ferner eine zuverlässige, dauernde Kommunikation des automatisch geführten Fahrzeugs mit anderen Einrichtungen vorgesehen. Auf diese Weise werden die fahrzeugeigenen Sensoren und Steuersysteme durch Informationen von außen unterstützt. Diese dauernde Kommunikation kann aber nicht in jeder Situationen gewährleistet werden, etwa wenn die Kommunikationsinfrastruktur lückenhaft ist oder Ausfälle aufweist.

Der vorliegenden Erfindung liegt die Aufgabe zugrunde, ein Verfahren und ein System der eingangs genannten Art bereitzustellen, bei denen eine zu einem hohen Grad automatisierte Steuerung erreicht wird, wobei das automatische geführte Fahrzeug weitgehend unabhängig gesteuert wird.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren der eingangs genannten Art wird ein Vorderfahrzeug entlang einer Ist-Trajektorie geführt. Für das Folgefahrzeug wird eine Soll-Trajektorie erzeugt und durch das Folgefahrzeug wird die Ist-Trajektorie des Vorderfahrzeugs erfasst. Durch einen Trajektorienvergleich zwischen der erfassten Ist-Trajektorie des Vorderfahrzeugs und der erzeugten Soll-Trajektorie des Folgefahrzeugs wird eine Trajektorienähnlichkeit bestimmt und es wird, wenn die Trajektorienähnlichkeit einen bestimmten Wert übersteigt, eine automatische Steuerung des Folgefahrzeugs entlang der Soll-Trajektorie aktiviert.

Als "Trajektorie" wird erfindungsgemäß ein Bewegungspfad bezeichnet, entlang dessen eines der beteiligten Fahrzeuge fahren kann. Insbesondere können darunter tatsächlich gefahrene und geplante Bewegungspfade verstanden werden. Insbesondere kann die Trajektorie beliebig lang oder kurz sein, beispielsweise kann sie einen Streckenabschnitt auf einer Fahrbahn oder eine längere Route zwischen zwei geographischen Positionen umfassen.

Als "Trajektorienähnlichkeit" wird erfindungsgemäß ein Maß dafür bezeichnet, das quantitativ den Grad der Ähnlichkeit zweier oder mehrerer Trajektorien angibt. Insbesondere kann dabei ein höherer Wert der Trajektorienähnlichkeit für eine größere Ähnlichkeit stehen. Es kann also bestimmt werden, ob miteinander verglichene Trajektorien im Wesentlichen miteinander übereinstimmen oder wie stark sie voneinander abweichen. Beispielsweise kann dabei der Abstand der Trajektorien voneinander, insbesondere ihr minimaler und maximaler Abstand, berücksichtigt werden. Es können ferner Richtungsänderungen entlang der zu vergleichenden Trajektorien berücksichtigt werden, etwa durch Betrachten der ersten Ableitung der Trajektorien, sodass beispielsweise parallel verlaufende Trajektorien ähnlicher bewertet werden können als solche mit sehr unterschiedlichem Verlauf.

Erfindungsgemäß wird vorteilhafterweise Redundanz dadurch erreicht, dass die für das Folgefahrzeug erzeugte Soll-Trajektorie mit der vom Vorderfahrzeug gefahrenen Ist-Trajektorie verglichen wird. Erfindungsgemäß wird die Soll-Trajektorie des Folgefahrzeugs automatisch von einem Fahrplaner des Folgefahrzeugs erzeugt. Die automatische Steuerung des Folgefahrzeugs wird nur dann freigegeben, wenn vorher sichergestellt wurde, dass die geplante Soll-Trajektorie oder eine hinreichend ähnliche Ist-Trajektorie bereits zuvor von dem Vorderfahrzeug befahren wurde. Da im Allgemeinen nicht davon auszugehen ist, dass Soll- und Ist-Trajektorie genau identisch sind, wird ein Trajektorienvergleich durchgeführt und ein bestimmter Schwellenwert für die Ähnlichkeit der Trajektorien gefordert.

Bei einer Ausbildung des erfindungsgemäßen Verfahrens wird die Ist-Trajektorie des Vorderfahrzeugs durch Sensoren des Folgefahrzeugs erfasst. Dadurch kann vorteilhafterweise die Sensorik des Folgefahrzeugs genutzt werden, um die Ist-Trajektorie des Vorderfahrzeugs zu erfassen.

Es kann insbesondere auf eine Reihe von typischerweise in modernen Fahrzeugen bereits vorhandenen Sensoren zurückgegriffen werden, beispielsweise bildverarbeitende Systeme, Radar- oder Lidarsensoren, Ultraschallsensoren und/oder weitere Sensorsysteme. Neben der Erfassung der Ist-Trajektorie des Vorderfahrzeugs können diese Sensoren auch für die automatische Steuerung sowie die Erzeugung der Soll-Trajektorie des Folgefahrzeugs verwendet werden.

Bei einer Weiterbildung werden durch die Sensoren des Folgefahrzeugs Bilddaten erfasst. Dadurch können vorteilhafterweise visuell erfassbarer Daten genutzt werden, um die Ist-Trajektorie des Vorderfahrzeugs zu erfassen und/oder die Soll-Trajektorie des Folgefahrzeugs zu erzeugen.

Insbesondere können Bilddaten mittels eines Kamerasystems erfasst werden, das visuell erfassbare Daten erfasst, darunter auch Kameras für den Infrarotbereich oder für andere Wellenlängenbereiche des Lichts. Auf diese Weise kann auch die Erfassung von Bilddaten bei Nacht oder schlechten Sichtverhältnissen ermöglicht werden. Typischerweise weisen Bilddaten einen hohen Komplexitätsgrad und eine hohe Informationsdichte auf. Insbesondere können die Bilddaten Verkehrsbauwerke und/oder Verkehrszeichen erfassen, die Bilddaten können ferner durch ein Bildverarbeitungs- und Erkennungssystem ausgewertet werden. Beispielsweise können Verkehrshinweise oder Verkehrsregelungen, etwa durch Verkehrsschilder, erkannt und berücksichtigt werden. Insbesondere wird dabei eine Erkennungsgüte quantifiziert, die angibt, mit welcher Sicherheit die Bilddaten richtig erkannt und interpretiert wurden.

Bei einer weiteren Ausbildung werden das Vorderfahrzeug und/oder das Folgefahrzeug so gesteuert, dass ihr Abstand zueinander kleiner oder gleich der Sichtweite ist. Dadurch ist vorteilhafterweise eine Erfassung der Ist-Trajektorie des Vorderfahrzeugs durch das Folgefahrzeug möglich, beispielsweise anhand von visuellen Daten, etwa von einem Kamerasystem.

Zur Regelung des Abstands zwischen Vorder- und Folgefahrzeug können unter anderem an sich bekannte Verfahren zur Abstandsregelung eingesetzt werden. Das System kann dabei so ausgebildet sein, dass die Regelung des Abstands allein durch das Folgefahrzeug erfolgt, wobei das Vorderfahrzeug den Abstand zum Folgefahrzeug nicht berücksichtigt. Ferner kann der Abstand alternativ oder zusätzlich vom Vorderfahrzeug geregelt werden, wobei in diesem Fall das Vorderfahrzeug eine Erfassungsvorrichtung zum Erfassen der Position des Folgefahrzeugs aufweist.

Die Sichtweite ist durch verschiedene Parameter bestimmt, insbesondere klimatische Verhältnisse wie etwa Nebel, den Streckenverlauf, der etwa eine Kurve oder eine Kuppe aufweist, sowie den umgebenden Verkehr, bei dem beispielsweise zwischen dem Vorderfahrzeug und dem Folgefahrzeug befindliche andere Verkehrsteilnehmer die Sichtverbindung unterbrechen können.

Insbesondere kann zunächst die Sichtweite durch Sensoren bestimmt werden, etwa durch optische Sensoren. Dadurch können beispielsweise klimatische Einflüsse wie Nebel in der Luft detektiert werden. Ferner kann auf Daten anderer Einrichtungen zugegriffen werden, etwa eine Datenbank, die Daten von Wetterstationen oder ähnliche Informationen bereitstellt. Ferner können Fahrzeuge detektiert werden, welche die Sichtweite begrenzen können. Es kann zudem der Streckenverlauf analysiert werden, beispielsweise um den Einfluss von Kurvenverläufen oder des Höhenprofils auf die Sichtweite auszuwerten. In einem weiteren Schritt wird dann beispielsweise die automatische Steuerung des Folgefahrzeugs so erzeugt, dass der Abstand zu dem Vorderfahrzeug kleiner ist als die Sichtweite.

Das Verfahren kann insbesondere so ausgebildet sein, dass ein Schwellenwert für die Dauer einer Unterbrechung der Sichtverbindung bestimmt wird, wobei die erfasste Ist-Trajektorie des Vorderfahrzeugs für eine bestimmte Dauer der unterbrochenen Sichtverbindung extrapoliert werden kann.

Bei einer weiteren Ausbildung werden durch das Vorderfahrzeug Daten über die Ist-Trajektorie des Vorderfahrzeugs erfasst und mittels einer datentechnischen Verbindung an das Folgefahrzeug übertragen. Dadurch ist vorteilhafterweise eine Erfassung der Ist-Trajektorie durch das Folgefahrzeug möglich, auch wenn die Erfassung nicht mittels der Sensorik des Folgefahrzeugs durchgeführt werden kann.

Insbesondere kann das Folgefahrzeug auf diese Weise die Ist-Trajektorie erfassen, ohne dass eine Sichtverbindung zum Vorderfahrzeug bestehen muss. Die durch das Vorderfahrzeug erfassten Daten über seine eigene Ist-Trajektorie können dabei auch ergänzend zu den von den Sensoren des Folgefahrzeugs erfassten Daten verwendet werden. Zur Erfassung der Ist-Trajektorie durch das Vorderfahrzeug kann etwa ein satellitengestütztes System verwendet werden, es können aber auch andere, an sich bekannte Verfahren zur Positions- und Routenbestimmung verwendet werden.

Bei einer Weiterbildung wird die datentechnische Verbindung durch einen externen Server hergestellt. Dadurch kann vorteilhafterweise eine Verwaltung der zu übertragenden Daten durch den externen Server bereitgestellt werden.

Insbesondere kann die Verbindung zu dem externen Server über ein Computernetzwerk, etwa das Internet, erfolgen. Dabei können die Daten über die Ist-Trajektorie des Vorderfahrzeugs auch an mehrere Folgefahrzeuge übertragen werden. Ferner kann eine bidirektionale Verbindung zwischen Vorder- und Folgefahrzeug bereitgestellt werden, beispielsweise um die Daten über die Ist-Trajektorie des Vorderfahrzeugs anzufordern. Der externe Server kann ferner eine Pufferfunktion erfüllen, so dass keine dauerhafte datentechnische Verbindung zwischen dem Vorderfahrzeug und dem Folgefahrzeug bestehen muss.

Bei der Bewertung der Ist-Trajektorie kann insbesondere berücksichtigt werden, wie groß der räumliche und/oder zeitliche Abstand zwischen dem Vorderfahrzeug und dem Folgefahrzeug ist. Je länger das Befahren der Ist-Trajektorie durch das Vorderfahrzeug zurückliegt, desto geringer kann die Aussagekraft zur Bewertung der Soll-Trajektorie des Folgefahrzeugs bewertet werden.

Bei einer Weiterbildung wird das Vorderfahrzeug automatisch geführt. Dadurch kann vorteilhafterweise ein hoher Grad an Automatisierung bei beiden Fahrzeugen erreicht werden.

Das Vorderfahrzeug kann insbesondere auch teilweise automatisch geführt werden, wobei beispielsweise einzelne Fahrmanöver, etwa das Einhalten eines bestimmten Abstands zu anderen Verkehrsteilnehmern, durch automatische Systeme durchgeführt werden, während etwa ein Fahrer die Kontrolle über das Führen des Fahrzeugs hat.

Insbesondere umfasst das Vorderfahrzeug einen Vorderfahrzeug-Fahrplaner, durch den die Ist-Trajektorie erzeugt wird. In bestimmten Fällen können die Ist-Trajektorie des Vorderfahrzeugs und die Soll-Trajektorie des Folgefahrzeugs bereits deshalb eine hohe Ähnlichkeit aufweisen, weil sie durch baugleiche oder ähnlich ausgebildete Fahrplaner erzeugt werden. Unterschiede zwischen Ist- und Soll-Trajektorie können in diesem Fall beispielsweise dadurch entstehen, dass andere Einrichtungen des Vorderfahrzeugs oder des Folgefahrzeugs Gegebenheiten erkennen, die eine Änderung der Trajektorie notwendig erscheinen lassen, etwa eine sich ändernde Verkehrssituation, etwa durch andere Verkehrsteilnehmer.

In einer weiteren Ausbildung wird das Vorderfahrzeug manuell von einem Vorderfahrzeug-Fahrer geführt. Dadurch entscheidet vorteilhafterweise ein menschlicher Fahrer über die Fahrt des Vorderfahrzeugs.

Insbesondere führt der Vorderfahrzeug-Fahrer das Vorderfahrzeug entlang einer Trajektorie, die prinzipiell auch für die automatische Steuerung des Folgefahrzeugs geeignet ist. Der Vorderfahrzeug-Fahrer befindet sich insbesondere im Vorderfahrzeug, allerdings kann das Vorderfahrzeug auch in an sich bekannter Weise über eine Fernsteuerung geführt werden.

Bei einer weiteren Ausbildung wird, wenn die Trajektorienähnlichkeit den bestimmten Wert nicht übersteigt, ein sicherer Fahrmodus des Folgefahrzeugs aktiviert. Damit wird vorteilhafterweise erreicht, dass das Folgefahrzeug auf einer für die automatische Steuerung ungeeigneten Trajektorie, beziehungsweise auf einer Trajektorie, deren Befahrbarkeit noch nicht durch das Vorderfahrzeug bestätigt wurde, sicher geführt wird.

Die Trajektorienähnlichkeit kann beispielsweise dann den bestimmten Wert nicht übersteigen, wenn sich seit dem Befahren der Ist-Trajektorie durch das Vorderfahrzeug Änderungen ergeben haben, die ein automatisches Befahren durch das Folgefahrzeug ungünstig erscheinen lassen. Dies kann beispielsweise ein Auftauchen anderer Verkehrsteilnehmer sein oder durch eine andere Beurteilung der Situation durch das Folgefahrzeug registriert werden.

Bei einer weiteren Ausbildung wird, wenn der sichere Fahrmodus des Folgefahrzeugs aktiviert ist, eine manuelle Steuerung des Folgefahrzeugs durch einen Folgefahrzeug-Fahrer aktiviert oder ein automatischer Anhaltevorgang des Folgefahrzeugs durchgeführt. Dadurch kann, wenn eine automatische Steuerung nicht mehr sicher möglich ist, ein weiterhin sicherer Betrieb des Fahrzeugs in vorteilhafter Weise sichergestellt werden.

Insbesondere kann beim Übergang in den sicheren Fahrmodus die Geschwindigkeit des Fahrzeugs verringert werden. Es kann ferner ein Fahrer des Folgefahrzeugs benachrichtigt oder aktiviert werden und die manuelle Steuerung des Folgefahrzeugs übernehmen, wobei sich der Fahrer im Folgefahrzeug befinden kann oder das Folgefahrzeug ferngesteuert werden kann. Es können ferner Systeme im Folgefahrzeug vorgesehen sein, die, falls keine manuelle Steuerung erfolgt, das Folgefahrzeug an einer geeigneten Stelle zum Halt bringen.

Bei einer weiteren Ausbildung umfasst die automatische Steuerung des Folgefahrzeugs eine Steuerung der Bewegung des Folgefahrzeugs in Längs- und Querrichtung. Dadurch können vorteilhafterweise Richtung und Geschwindigkeit des Folgefahrzeugs entlang einer Trajektorie gesteuert werden.

Nach dem erfindungsgemäßen Verfahren wird durch das Vorderfahrzeug ein Verlässlichkeitswert bestimmt, der Verlässlichkeitswert wird an das Folgefahrzeug übertragen und die automatische Steuerung des Folgefahrzeugs wird ferner in Abhängigkeit von dem Verlässlichkeitswert aktiviert. Dadurch wird berücksichtigt, wie das Vorderfahrzeug die von ihm befahrene Ist-Trajektorie bewertet.

Der Verlässlichkeitswert quantifiziert erfindungsgemäß die Sicherheit der von dem Vorderfahrzeug befahrenen Ist-Trajektorie. Insbesondere kann das Vorderfahrzeug beim Befahren der Ist-Trajektorie oder beim Erzeugen der Ist-Trajektorie einen Verlässlichkeitswert so bestimmen, dass damit etwa auftretende Unsicherheiten bewertet werden. Wird beispielsweise ein Bilderfassungs- und Verarbeitungssystem im Vorderfahrzeug verwendet, so kann dabei bestimmt werden, mit welcher Genauigkeit die Erfassung erfolgt. Dies kann beispielsweise dazu führen, dass eine weniger automatisierte Steuerung des Vorderfahrzeugs aktiviert wird. Diese Information kann an das Folgefahrzeug übertragen werden.

Bei dem erfindungsgemäßen System zur automatischen Steuerung eines Folgefahrzeugs mit einem Vorderfahrzeug umfasst das Vorderfahrzeug eine Vorderfahrzeug-Steuereinrichtung, durch die das Vorderfahrzeug entlang einer Ist-Trajektorie führbar ist. Das Folgefahrzeug umfasst eine Erfassungseinrichtung, durch die die Ist-Trajektorie des Vorderfahrzeugs erfassbar ist. Das Folgefahrzeug umfasst ferner einen Folgefahrzeug-Fahrplaner, durch den eine Soll-Trajektorie für das Folgefahrzeug erzeugbar ist, und eine Folgefahrzeug-Steuereinrichtung, durch die das Folgefahrzeug entlang der Soll-Trajektorie steuerbar ist. Dabei ist durch einen Trajektorienvergleich zwischen der erfassten Ist-Trajektorie des Vorderfahrzeugs und der erzeugten Soll-Trajektorie des Folgefahrzeugs eine Trajektorienähnlichkeit bestimmbar. Ferner ist, wenn die Trajektorienähnlichkeit einen bestimmten Wert übersteigt, eine automatische Steuerung des Folgefahrzeugs entlang der Soll-Trajektorie aktivierbar.

Das erfindungsgemäße System ist erfindungsgemäß ausgebildet, das vorstehend beschriebene Verfahren zu implementieren. Das System weist somit dieselben Vorteile auf wie das erfindungsgemäße Verfahren.

Bei einer weiteren Ausbildung des erfindungsgemäßen Systems umfasst die Erfassungseinheit des Folgefahrzeugs Sensoren und durch die Sensoren sind Bilddaten erfassbar. Dadurch kann vorteilhafterweise die Ist-Trajektorie des Vorderfahrzeugs anhand von eigenen Sensoren des Folgefahrzeugs erfasst werden.

Bei einer weiteren Ausbildung sind durch das Vorderfahrzeug Daten über die Ist-Trajektorie des Vorderfahrzeugs erfassbar und es besteht zumindest zeitweise eine datentechnische Verbindung zwischen Vorderfahrzeug und Folgefahrzeug. Dabei sind die Daten über die Ist-Trajektorie an das Folgefahrzeug übertragbar. Dadurch kann vorteilhafterweise die Erfassung der Ist-Trajektorie durch die Daten des Vorderfahrzeugs ergänzt oder vollständig durch diese Daten erfasst werden. Insbesondere wird die datentechnische Verbindung über einen externen Server hergestellt. Die Erfassung der Daten über die Ist-Trajektorie durch das Vorderfahrzeug kann anhand eines satellitengestützten Positionierungssystems erfolgen oder anhand anderer, an sich bekannter Positionsbestimmungssysteme.

Die Erfindung wird nun anhand von Ausführungsbeispielen mit Bezug zu den Zeichnungen erläutert.
- Figur 1: zeigt ein Vorderfahrzeug und ein Folgefahrzeug auf einem Streckenabschnitt,
- Figur 2: zeigt ein Ausführungsbeispiel des erfindungsgemäßen Systems und
- Figur 3: zeigt ein weiteres Ausführungsbeispiel des erfindungsgemäßen Systems.

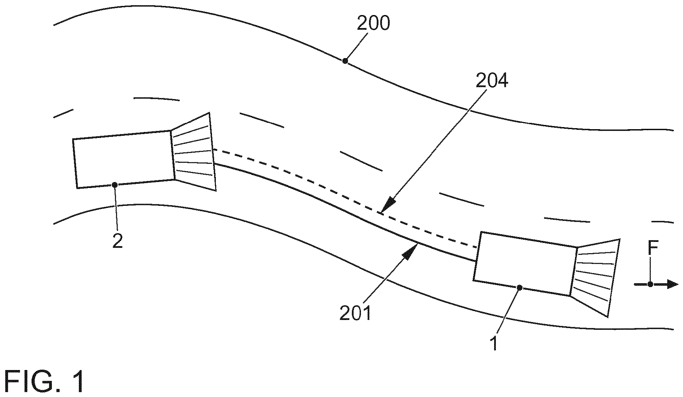

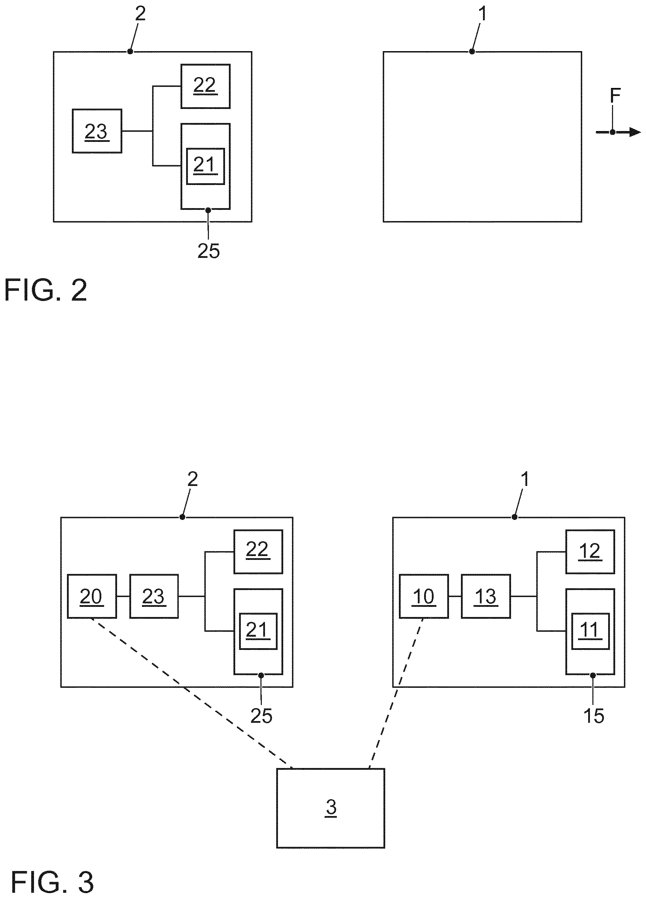

Mit Bezug zu den Figuren 1 und 2 wird ein Ausführungsbeispiel des erfindungsgemäßen Systems und Verfahrens erläutert.

Auf einem Streckenabschnitt 200 bewegt sich entlang einer Ist-Trajektorie 201 ein Vorderfahrzeug 1 in Fahrtrichtung F. Hinter dem Vorderfahrzeug 1 fährt ein Folgefahrzeug 2 in die gleiche Fahrtrichtung F. Dabei umfasst das Folgefahrzeug 2 eine Erfassungseinheit 25, die wiederum Sensoren 21 umfasst. Es umfasst ferner einen Fahrplaner 22. Der Fahrplaner 22 und die Erfassungseinheit 25 sind mit einer Steuereinheit 23 gekoppelt.

In dem dargestellten Beispiel wird das Folgefahrzeug 2 so geführt, dass der Abstand zwischen dem Vorderfahrzeug 1 und dem Folgefahrzeug 2 geringer als die Sichtweite ist. In dem Ausführungsbeispiel wird die Sichtweite durch die Sensoren 21 des Folgefahrzeugs 2 bestimmt, die optische Eigenschaften der Luft detektieren und Fahrzeuge in der Umgebung des Folgefahrzeugs 2 und des Vorderfahrzeugs 1 erkennen sowie deren Bewegung verfolgen. Ferner kann der Fahrplaner 22 des Folgefahrzeugs 2 auf eine Datenbank zugreifen, die Informationen bereitstellt über den Verlauf eines Wegenetzes, auf dem die automatische Führung erfolgt. So wird bereits vorausschauend festgestellt, wenn enge Kurven oder eine Bergkuppe zwischen dem Folgefahrzeug 2 und dem Vorderfahrzeug 1 die Sichtverbindung zu unterbrechen droht. Der Abstand kann in diesem Fall verringert werden oder es kann analysiert werden, wie lange die Unterbrechung voraussichtlich dauern wird.

Bei der Ausführung des erfindungsgemäßen Verfahrens wird zunächst durch den Fahrplaner 22 eine Soll-Trajektorie 204 für die Fortsetzung der Fahrt des Folgefahrzeugs 2 erzeugt. Die Ist-Trajektorie 201 des Vorderfahrzeugs 1 wird durch die Sensoren 21 der Erfassungseinheit 25 des Folgefahrzeugs 2, insbesondere durch optische sowie Radar- und Lidar-Sensoren, erfasst und mit der für das Folgefahrzeug 2 erzeugten Soll-Trajektorie 204 verglichen. Insbesondere wird dieser Vergleich mittels einer von der Steuereinheit 23 umfassten Vergleichseinheit durchgeführt.Dabei wird eine Trajektorienähnlichkeit bestimmt, für die ein bestimmter Schwellenwert definiert ist.

Die Trajektorienähnlichkeit quantifiziert insbesondere die Abweichungen zwischen den verglichenen Trajektorien und ihr Wert ist dabei umso höher, je ähnlicher sich die Trajektorien sind. Der Trajektorienvergleich kann auf verschiedene Weise durchgeführt werden, insbesondere können räumliche Abstände der Trajektorien zueinander quantifiziert werden und es kann der Verlauf der Trajektorien anhand deren Ableitung verglichen werden. Ferner können bestimmte Abweichungen mit einer jeweils verschiedenen Gewichtung betrachtet werden, beispielsweise können plötzliche Richtungsänderungen mit besonders hoher Gewichtung berücksichtigt werden, während kleinere Ausweichmanöver niedriger gewichtet werden. Insbesondere können bei der Erzeugung der Trajektorienähnlichkeit auch weitere Daten über die bloßen Trajektorien hinaus berücksichtigt werden, beispielsweise von den Systemen zur Erzeugung der Trajektorien.

Wurde durch einen Vergleich der bestimmten Trajektorienähnlichkeit mit dem definierten Schwellenwert festgestellt, dass eine ausreichend hohe Ähnlichkeit der verglichenen Trajektorien vorliegt, so wird eine automatische Steuerung des Folgefahrzeugs 2 entlang der Soll-Trajektorie 204 aktiviert. In diesem Fall übernimmt die Steuereinheit 23 des Folgefahrzeugs 2 die Steuerung des Folgefahrzeugs 2 in Längs- und Querrichtung. Insbesondere erfolgt dies anhand von Daten, die durch die Erfassungseinheit 25 erfasst werden, etwa Informationen über Positionen und die Bewegung andere Verkehrsteilnehmer, den Fahrbahnverlauf, Hindernisse auf der Fahrbahn und verkehrsrechtliche Einschränkungen wie Geschwindigkeitsbeschränkungen oder Überholverbote.

Andernfalls, wenn also der Schwellenwert nicht erreicht wird, wird keine automatische Steuerung vorgenommen, sondern ein sicherer Fahrmodus für das Folgefahrzeug 2 aktiviert und ein Fahrer übernimmt die manuelle Führung. Beim Übergang in den sicheren Fahrmodus wird insbesondere die Geschwindigkeit des Folgefahrzeugs 2 verringert und der Fahrer wird aktiviert, beispielsweise durch die Ausgabe eines akustischen und/oder visuellen Warnsignals, durch das der im Folgefahrzeug 2 befindliche Fahrer darauf hingewiesen wird, dass er die Steuerung des Folgefahrzeugs 2 übernehmen soll. Während sich der Fahrer des Folgefahrzeugs 2 beim automatischen Führen des Folgefahrzeugs 2 mit anderen Aufgaben beschäftigen kann, übernimmt er nun die Steuerung manuell. Dabei kann die manuelle Steuerung dennoch durch verschiedene Assistenzsysteme unterstützt werden, beispielsweise durch einen Spurhalteassistenten, einen Abstandstempomat und/oder Spurwechselassistenten. In dem Ausführungsbeispiel ist ferner eine bestimmte Dauer für den Übergang von der automatischen zur manuellen Steuerung vorgesehen, wobei das Folgefahrzeug 2 an einer geeigneten Stelle zum Halt gebracht wird, wenn der Fahrer die Steuerung nicht innerhalb der bestimmten Übergangsdauer übernimmt.

In einem weiteren Ausführungsbeispiel befindet sich der Fahrer des Folgsfahrzeugs 2 nicht im Folgefahrzeug 2, sondern es wird eine Fernsteuerung durchgeführt.

Mit Bezug zu Figur 3 wird ein weiteres Ausführungsbeispiel des erfindungsgemäßen Systems erläutert. Es wird dabei ebenfalls von dem oben mit Bezug zu Figur 1 erläuterten Fall ausgegangen.

Dieses Ausführungsbeispiel stellt eine Abwandlung des in Figur 2 dargestellten Systems dar, wobei eine Kommunikation zwischen Vorderfahrzeug 1 und Folgefahrzeug 2 vorgesehen ist.

In diesem Ausführungsbeispiel wird die Ist-Trajektorie des Vorderfahrzeugs 1 erfasst, indem das Folgefahrzeug 2 Daten von dem Vorderfahrzeug 1 empfängt. Das Folgefahrzeug 2 umfasst, ähnlich wie in dem mit Bezug zu Figur 2 dargestellten Fall, eine Steuereinheit 23, mit der ein Fahrplaner 22 und eine Erfassungseinheit 25 mit Sensoren 21 gekoppelt sind. Ferner ist mit der Steuerungseinheit 23 eine Datenschnittstelle 20 gekoppelt, durch die zumindest zeitweise eine datentechnische Verbindung zu einem externen Server 3 hergestellt wird. Der externe Server 3 wird im Folgenden als Center 3 bezeichnet, da er die Aufgabe einer zentralen Verwaltungseinheit übernimmt.

Das Vorderfahrzeug 1 umfasst in dem Ausführungsbeispiel ebenfalls eine Steuerungseinheit 13, mit der ein Fahrplaner 12 und eine Erfassungseinheit 15 mit Sensoren 11 gekoppelt sind. Die Sensoren 11 des Vorderfahrzeugs 1 umfassen insbesondere Sensoren zum Empfang von Signalen eines satellitengestützten Positionsbestimmungssystems. Mit der Steuereinheit 13 des Vorderfahrzeugs 1 ist ferner eine Datenschnittstelle 10 gekoppelt, durch die zumindest zeitweise eine datentechnische Verbindung zu dem Center 3 hergestellt werden kann.

Die datentechnische Verbindung zu dem Center 3, sowohl von der Datenschnittstelle 20 des Folgefahrzeugs 2 als auch von der Datenschnittstelle 10 des Vorderfahrzeugs 1, kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch eine andere Einheit hergestellt werden, die selbst eine Verbindung zu dem Center 3 herstellen kann. Beispielsweise kann ein Mobiltelefon, etwa durch ein Datenkabel, oder eine Funkverbindung, etwa per Bluetooth, mit der Datenschnittstelle 10 des Vorderfahrzeugs 1 oder der Datenschnittstelle 20 des Folgefahrzeugs 2 verbunden sein und die Verbindung zu dem Center 3 vermitteln.

Durch die Erfassungseinheit 15 mit den Sensoren 11 des Vorderfahrzeugs 1 wird nun die Ist-Trajektorie 201 des Vorderfahrzeugs 1 erfasst. Dies geschieht in dem dargestellten Beispiel anhand eines satellitengestützten Positionsbestimmungssystems, etwa GPS, allerdings kann die Trajektorie auf beliebige andere, an sich bekannte Weise erfasst werden. Über das Center 3 erfolgt eine Übertragung von Daten zu der Ist-Trajektorie 201 von dem Vorderfahrzeug 1 zum Folgefahrzeug 2. Die auf die beschriebene Art übertragenen Daten können alternativ oder zusätzlich zu von der Erfassungseinheit 25 mit den Sensoren 22 des Folgefahrzeugs 2 erfassten Daten verwendet werden. Beispielsweise kann ein Abgleich der durch das Folgefahrzeug 2 beobachteten Ist-Trajektorie 201 und der von dem Vorderfahrzeug 1 erfassten Ist-Trajektorie 201 ausgewertet werden. Im Idealfall werden diese Daten übereinstimmen.

Es erfolgt nun, wie in dem mit Bezug zu Figur 2 erläuterten Fall, ein Trajektorienvergleich zwischen der für das Folgefahrzeug 2 erzeugten Soll-Trajektorie 204 und der erfassten Ist-Trajektorie 201, wobei eine Trajektorienähnlichkeit erzeugt und mit einem definierten Schwellenwert verglichen wird. Überschreitet die Trajektorienähnlichkeit den Schwellenwert, so wird nach der oben beschriebenen Art eine automatische Steuerung des Folgefahrzeugs 2 entlang der Soll-Trajektorie 204 aktiviert.

Bei dem in Figur 3 dargestellten Ausführungsbeispiel umfasst das Vorderfahrzeug 1 ferner einen Routenplaner 12. Es kann in einem Ausführungsbeispiel vorgesehen sein, dass dieser Routenplaner 12 die Ist-Trajektorie 201 des Vorderfahrzeugs 1 erzeugt und die Steuerung des Vorderfahrzeugs 1 automatisch durch seine Steuereinheit 13 erfolgt. Insbesondere kann in einem Ausführungsbeispiel das Vorderfahrzeug 1 selbst wiederum eine dem Folgefahrzeug 2 vergleichbare Rolle spielen, wobei in diesem Fall ein weiteres Fahrzeug in Fahrtrichtung F vor dem Vorderfahrzeug 1 erforderlich ist.

Wird bei dem erfindungsgemäßen Verfahren der vorgegebene Schwellenwert für die Trajektorienähnlichkeit der Ist-Trajektorie 201 und der Soll-Trajektorie 204 nicht überschritten, das heißt, wenn wesentliche Abweichungen zwischen den verglichenen Trajektorien erkannt werden, dann wird ein sicherer Fahrmodus für das Folgefahrzeug 2 aktiviert. Wie bereits oben beschrieben, wird beim Übergang in den sicheren Fahrmodus insbesondere die Geschwindigkeit des Folgefahrzeugs 2 verringert und es wird ein Fahrer aktiviert, etwa mittels akustischer und/oder visueller Signale, um die die Steuerung des Folgefahrzeugs 2 manuell zu übernehmen. Dabei ist in dem Ausführungsbeispiel eine bestimmte Dauer für den Übergang von der automatischen zur manuellen Steuerung vorgesehen, wobei das Folgefahrzeug 2 an einer geeigneten Stelle zum Halt gebracht wird, wenn der Fahrer die Steuerung nicht innerhalb der bestimmten Übergangsdauer übernimmt.

Gemäß der Erfindung wird die von dem Vorderfahrzeug 1 befahrene Ist-Trajektorie 201 bewertet, wobei vorgesehen ist, dass beim Erzeugen der Ist-Trajektorie 201 für das Vorderfahrzeug 1 ein Verlässlichkeitswert bestimmt wird. Diese Bestimmung erfolgt anhand der zur Erzeugung der Ist-Trajektorie 201 verwendeten Daten, insbesondere anhand der Sicherheit, mit der eine Bilderkennung anhand von Daten der Sensoren 11 des Vorderfahrzeugs 1 durchgeführt wird. Es kann ferner ein menschlicher Nutzer des Systems vorgesehen sein, etwa ein Fahrer im Vorderfahrzeug 1, der die Verlässlichkeit der Ist-Trajektorie 201 bewertet.

Die oben dargestellten Ausführungsbeispiele können selbstverständlich in beliebigen Kombinationen verwendet werden, insbesondere kann eine automatische Steuerung des Vorderfahrzeugs 1 erfolgen, bei der die Ist-Trajektorie 201 durch den Fahrplaner 12 erzeugt wird und das Vorderfahrzeug 1 durch die Steuereinheit 13 geführt wird. Es ist dabei nicht notwendig, dass Daten, insbesondere über die Ist-Trajektorie 201 des Vorderfahrzeugs 1, an das Folgefahrzeug 2 übertragen werden.

Insbesondere erlaubt das erfindungsgemäße System, wie in den oben erläuterten Ausführungsbeispielen erkennbar, eine Steuerung des Folgefahrzeugs 2 zu einem hohen Grad zu automatisieren, ohne dass dafür eine Kommunikation mit anderen Einrichtungen vonnöten wäre.

### Bezugszeichenliste

- 1: Vorderfahrzeug
- 2: Folgefahrzeug
- 3: externer Server; Center
- 10: Datenschnittstelle (Vorderfahrzeug)
- 11: Sensoren (Vorderfahrzeug)
- 12: Fahrplaner (Vorderfahrzeug)
- 13: Steuereinheit (Vorderfahrzeug)
- 15: Erfassungseinheit (Vorderfahrzeug)
- 20: Datenschnittstelle (Folgefahrzeug)
- 21: Sensoren (Folgefahrzeug)
- 22: Fahrplaner (Folgefahrzeug)
- 23: Steuereinheit (Folgefahrzeug)
- 25: Erfassungseinheit (Folgefahrzeug)
- 200: Streckenabschnitt
- 201: Ist-Trajektorie des Vorderfahrzeugs
- 204: Soll-Trajektorie des Folgefahrzeugs
- F: Fahrtrichtung

## Patentansprüche

1. Verfahren zur automatischen Steuerung eines Folgefahrzeugs (2), bei dem
ein Vorderfahrzeug (1) entlang einer Ist-Trajektorie (201) geführt wird,
durch einen Fahrplaner des Folgefahrzeugs (2) für das Folgefahrzeug (2) eine Soll-Trajektorie (204) erzeugt wird,
durch das Folgefahrzeug (2) die Ist-Trajektorie (201) des Vorderfahrzeugs (1) erfasst wird,
durch einen Trajektorienvergleich zwischen der erfassten Ist-Trajektorie (201) des Vorderfahrzeugs (1) und der erzeugten Soll-Trajektorie (204) des Folgefahrzeugs (2) eine Trajektorienähnlichkeit bestimmt wird und,
wenn die Trajektorienähnlichkeit einen bestimmten Wert übersteigt, eine automatische Steuerung des Folgefahrzeugs (1) entlang der Soll-Trajektorie (204) aktiviert wird,
**dadurch gekennzeichnet, dass**
durch das Vorderfahrzeug (1) ein Verlässlichkeitswert bestimmt wird,
der Verlässlichkeitswert an das Folgefahrzeug (2) übertragen wird und
die automatische Steuerung des Folgefahrzeugs (2) ferner in Abhängigkeit von dem Verlässlichkeitswert aktiviert wird, wobei
der Verlässlichkeitswert die Sicherheit der von dem Vorderfahrzeug (1) befahrenen Ist-Trajektorie (201) quantifiziert.

2. Verfahren gemäß Anspruch 1,
**dadurch gekennzeichnet, dass**
die Ist-Trajektorie (201) des Vorderfahrzeugs (1) durch Sensoren (21) des Folgefahrzeugs (2) erfasst wird.

3. Verfahren gemäß Anspruch 2,
**dadurch gekennzeichnet, dass**
durch die Sensoren (21) des Folgefahrzeugs (2) Bilddaten erfasst werden.

4. Verfahren gemäß einem der vorhergehenden Ansprüche,
**dadurch gekennzeichnet, dass**
das Vorderfahrzeug (1) und/oder das Folgefahrzeug (2) so gesteuert werden, dass ihr Abstand zueinander kleiner oder gleich der Sichtweite ist.

5. Verfahren gemäß einem der vorhergehenden Ansprüche,
**dadurch gekennzeichnet, dass**
durch das Vorderfahrzeug (1) Daten über die Ist-Trajektorie (201) des Vorderfahrzeugs (1) erfasst und mittels einer datentechnischen Verbindung an das Folgefahrzeug (2) übertragen werden.

6. Verfahren nach Anspruch 5,
**dadurch gekennzeichnet, dass**
die datentechnische Verbindung durch einen externen Server (3) hergestellt wird.

7. Verfahren gemäß einem der vorhergehenden Ansprüche,
**dadurch gekennzeichnet, dass**
das Vorderfahrzeug (1) automatisch geführt wird.

8. Verfahren gemäß einem der Ansprüche 1 bis 6,
**dadurch gekennzeichnet, dass**
das Vorderfahrzeug (1) manuell von einem Vorderfahrzeug-Fahrer geführt wird.

9. Verfahren gemäß einem der vorhergehenden Ansprüche,
**dadurch gekennzeichnet, dass,**
wenn die Trajektorienähnlichkeit den bestimmten Wert nicht übersteigt, ein sicherer Fahrmodus des Folgefahrzeugs (2) aktiviert wird.

10. Verfahren gemäß Anspruch 9,
**dadurch gekennzeichnet, dass,**
wenn der sichere Fahrmodus des Folgefahrzeugs (2) aktiviert ist, eine manuelle Steuerung des Folgefahrzeugs (2) durch einen Folgefahrzeug-Fahrer aktiviert wird oder ein automatischer Anhaltevorgang des Folgefahrzeugs (2) durchgeführt wird.

11. Verfahren gemäß einem der vorhergehenden Ansprüche,
**dadurch gekennzeichnet, dass**
die automatische Steuerung des Folgefahrzeugs (2) eine Steuerung der Bewegung des Folgefahrzeugs (2) in Längs- und Querrichtung umfasst.

12. System zur automatischen Steuerung eines Folgefahrzeugs (2) mit einem Vorderfahrzeug (1),
wobei das Vorderfahrzeug (1) eine Vorderfahrzeug-Steuereinrichtung (13) umfasst, durch die das Vorderfahrzeug (1) entlang einer Ist-Trajektorie (201) führbar ist, und
wobei das Folgefahrzeug (2) umfasst:
eine Erfassungseinrichtung (25), durch die die Ist-Trajektorie (201) des Vorderfahrzeugs (1) erfassbar ist,
einen Folgefahrzeug-Fahrplaner (22), durch den eine Soll-Trajektorie (204) für das Folgefahrzeug (2) erzeugbar ist, und
eine Folgefahrzeug-Steuereinrichtung (23), durch die das Folgefahrzeug (2) entlang der Soll-Trajektorie (204) steuerbar ist; wobei
durch einen Trajektorienvergleich zwischen der erfassten Ist-Trajektorie (201) des Vorderfahrzeugs (1) und der erzeugten Soll-Trajektorie (204) des Folgefahrzeugs (2) eine Trajektorienähnlichkeit bestimmbar ist, und,
wenn die Trajektorienähnlichkeit einen bestimmten Wert übersteigt, eine automatische Steuerung des Folgefahrzeugs (2) entlang der Soll-Trajektorie (204) aktivierbar ist,
**dadurch gekennzeichnet, dass**
durch das Vorderfahrzeug (1) ein Verlässlichkeitswert bestimmt wird,
der Verlässlichkeitswert an das Folgefahrzeug (2) übertragen wird und
die automatische Steuerung des Folgefahrzeugs (2) ferner in Abhängigkeit von dem Verlässlichkeitswert aktiviert wird, wobei
der Verlässlichkeitswert die Sicherheit der von dem Vorderfahrzeug (1) befahrenen Ist-Trajektorie (201) quantifiziert.

13. System nach Anspruch 12,
**dadurch gekennzeichnet, dass**
die Erfassungseinheit (25) des Folgefahrzeugs (2) Sensoren (21) umfasst und durch die Sensoren (21) Bilddaten erfassbar sind.

14. System nach einem der Ansprüche 12 und 13,
**dadurch gekennzeichnet, dass**
durch das Vorderfahrzeug (1) Daten über die Ist-Trajektorie (201) des Vorderfahrzeugs (1) erfassbar sind und
zumindest zeitweise eine datentechnische Verbindung zwischen Vorderfahrzeug (1) und Folgefahrzeug (2) besteht, wobei
die Daten über die Ist-Trajektorie (201) an das Folgefahrzeug (2) übertragbar sind.

## Claims

1. Method for automatically controlling a following vehicle (2), in which
a leading vehicle (1) is guided along an actual trajectory (201),
a desired trajectory (204) is produced for the following vehicle (2) by a scheduler of the following vehicle (2), the actual trajectory (201) of the leading vehicle (1) is captured by the following vehicle (2),
a trajectory similarity is determined by comparing the captured actual trajectory (201) of the leading vehicle (1) and the produced desired trajectory (204) of the following vehicle (2), and
automatic control of the following vehicle (1) along the desired trajectory (204) is activated if the trajectory similarity exceeds a particular value,
**characterized in that**
a reliability value is determined by the leading vehicle (1),
the reliability value is transmitted to the following vehicle (2), and
the automatic control of the following vehicle (2) is also activated on the basis of the reliability value, wherein
the reliability value quantifies the safety of the actual trajectory (201) travelled on by the leading vehicle (1) .

2. Method according to Claim 1,
**characterized in that**
the actual trajectory (201) of the leading vehicle (1) is captured by sensors (21) of the following vehicle (2) .

3. Method according to Claim 2,
**characterized in that**
image data are captured by the sensors (21) of the following vehicle (2).

4. Method according to one of the preceding claims,
**characterized in that**
the leading vehicle (1) and/or the following vehicle (2) is/are controlled in such a manner that their distance with respect to one another is less than or equal to the visual range.

5. Method according to one of the preceding claims,
**characterized in that**
data relating to the actual trajectory (201) of the leading vehicle (1) are captured by the leading vehicle (1) and are transmitted to the following vehicle (2) by means of a data connection.

6. Method according to Claim 5,
**characterized in that**
the data connection is established by an external server (3) .

7. Method according to one of the preceding claims,
**characterized in that**
the leading vehicle (1) is guided automatically.

8. Method according to one of Claims 1 to 6,
**characterized in that**
the leading vehicle (1) is guided manually by a leading vehicle driver.

9. Method according to one of the preceding claims,
**characterized in that**
if the trajectory similarity does not exceed the particular value, a safe driving mode of the following vehicle (2) is activated.

10. Method according to Claim 9,
**characterized in that**
if the safe driving mode of the following vehicle (2) is activated, manual control of the following vehicle (2) by a following vehicle driver is activated or an automatic operation of stopping the following vehicle (2) is carried out.

11. Method according to one of the preceding claims,
**characterized in that**
the automatic control of the following vehicle (2) comprises control of the movement of the following vehicle (2) in the longitudinal and transverse directions.

12. System for automatically controlling a following vehicle (2) using a leading vehicle (1),
the leading vehicle (1) comprising a leading vehicle control device (13) which can guide the leading vehicle (1) along an actual trajectory (201), and
the following vehicle (2) comprising:
a capture device (25) which can capture the actual trajectory (201) of the leading vehicle (1),
a following vehicle journey planner (22) which can produce a desired trajectory (204) for the following vehicle (2), and
a following vehicle control device (23) which can control the following vehicle (2) along the desired trajectory (204) ;
a trajectory similarity being able to be determined by comparing the captured actual trajectory (201) of the leading vehicle (1) and the produced desired trajectory (204) of the following vehicle (2), and
automatic control of the following vehicle (2) along the desired trajectory (204) being able to be activated if the trajectory similarity exceeds a particular value,
**characterized in that**
a reliability value is determined by the leading vehicle (1),
the reliability value is transmitted to the following vehicle (2), and
the automatic control of the following vehicle (2) is also activated on the basis of the reliability value,
wherein
the reliability value quantifies the safety of the actual trajectory (201) travelled on by the leading vehicle (1).

13. System according to Claim 12,
**characterized in that**
the capture unit (25) of the following vehicle (2) comprises sensors (21), and
image data can be captured by the sensors (21).

14. System according to either of Claims 12 and 13,
**characterized in that**
data relating to the actual trajectory (201) of the leading vehicle (1) can be captured by the leading vehicle (1), and
a data connection at least temporarily exists between the leading vehicle (1) and the following vehicle (2),
the data relating to the actual trajectory (201) being able to be transmitted to the following vehicle (2).

## Revendications

1. Procédé de commande automatique d'un véhicule suivant (2), procédé dans lequel
un véhicule précédent (1) est guidé le long d'une trajectoire réelle (201),
une trajectoire cible (204) est générée pour le véhicule suivant (2) par un planificateur de conduite du véhicule suivant (2),
la trajectoire réelle (201) du véhicule précédent (1) est détectée par le véhicule suivant (2),
une similitude de trajectoire est déterminée par une comparaison de trajectoire entre la trajectoire réelle détectée (201) du véhicule précédent (1) et la trajectoire cible générée (204) du véhicule suivant (2), et,
si la similitude de trajectoire dépasse une valeur déterminée, une commande automatique du véhicule suivant (1) le long de la trajectoire cible (204) est activée,
**caractérisé en ce que**
une valeur de fiabilité est déterminée par le véhicule précédent (1),
la valeur de fiabilité est transférée au véhicule suivant (2) et
la commande automatique du véhicule suivant (2) est en outre activée en fonction de la valeur de fiabilité,
la valeur de fiabilité quantifiant la sécurité de la trajectoire réelle (201) parcourue par le véhicule précédent (1).

2. Procédé selon la revendication 1,
**caractérisé en ce que**
la trajectoire réelle (201) du véhicule précédent (1) est détectée par des capteurs (21) du véhicule suivant (2) .

3. Procédé selon la revendication 2,
**caractérisé en ce que**
des données d'image sont détectées par les capteurs (21) du véhicule suivant (2).

4. Procédé selon l'une des revendications précédentes,
**caractérisé en ce que**
le véhicule précédent (1) et/ou le véhicule suivant (2) peuvent être commandés de façon à ce que la distance entre eux soit inférieure ou égale à la portée optique.

5. Procédé selon l'une des revendications précédentes,
**caractérisé en ce que**
le véhicule précédent (1) détecte des données sur la trajectoire réelle (201) du véhicule précédent (1) et les transmet au véhicule suivant (2) au moyen d'une liaison de données.

6. Procédé selon la revendication 5,
**caractérisé en ce que**
la liaison de données est établie par un serveur externe (3).

7. Procédé selon l'une des revendications précédentes,
**caractérisé en ce que**
le véhicule précédent (1) est guidé automatiquement.

8. Procédé selon l'une des revendications 1 à 6,
**caractérisé en ce que**
le véhicule précédent (1) est guidé manuellement par le conducteur du véhicule précédent.

9. Procédé selon l'une des revendications précédentes,
**caractérisé en ce que**,
si la similitude de trajectoire ne dépasse pas la valeur déterminée, un mode de conduite sûre du véhicule suivant (2) est activé.

10. Procédé selon la revendication 9,
**caractérisé en ce que**,
si le mode de conduite sûre du véhicule suivant (2) est activé, la commande manuelle du véhicule suivant (2) est activée par le conducteur de véhicule suivant ou un processus d'arrêt automatique du véhicule suivant (2) est exécuté.

11. Procédé selon l'une des revendications précédentes,
**caractérisé en ce que**
la commande automatique du véhicule suivant (2) comprend une commande du déplacement du véhicule suivant (2) dans les directions longitudinale et transversale.

12. Système de commande automatique d'un véhicule suivant (2) avec un véhicule précédent (1),
le véhicule précédent (1) comprenant un dispositif de commande de véhicule précédent (13) permettant de guider le véhicule précédent (1) le long d'une trajectoire réelle (201), et
le véhicule suivant (2) comprenant :
un dispositif de détection (25) permettant de détecter la trajectoire réelle (201) du véhicule précédent (1), un planificateur de conduite de véhicule suivant (22) permettant de générer une trajectoire cible (204) pour le véhicule suivant (2), et
un dispositif de commande de véhicule suivant (23) permettant de commander le véhicule suivant (2) le long de la trajectoire cible (204) ;
une similitude de trajectoire pouvant être déterminée par une comparaison de trajectoire entre la trajectoire réelle détectée (201) du véhicule précédent (1) et la trajectoire cible générée (204) du véhicule suivant (2), et,
si la similitude de trajectoire dépasse une valeur déterminée, une commande automatique du véhicule suivant (2) le long de la trajectoire cible (204) pouvant être activée,
**caractérisé en ce que**
une valeur de fiabilité est déterminée par le véhicule précédent (1),
la valeur de fiabilité est transférée au véhicule suivant (2) et
la commande automatique du véhicule suivant (2) est en outre activée en fonction de la valeur de fiabilité,
la valeur de fiabilité quantifiant la sécurité de la trajectoire réelle (201) parcourue par le véhicule précédent (1).

13. Système selon la revendication 12,
**caractérisé en ce que**
l'unité de détection (25) du véhicule suivant (2) comprend des capteurs (21) et des données d'image peuvent être détectées par les capteurs (21).

14. Système selon l'une des revendications 12 et 13, **caractérisé en ce que**
des données sur la trajectoire réelle (201) du véhicule précédent (1) peuvent être détectées par le véhicule précédent (1) et
une liaison de données étant établie au moins temporairement entre le véhicule précédent (1) et le véhicule suivant (2),
les données sur la trajectoire réelle (201) pouvant être transmises au véhicule suivant (2).
